# EUROPÄISCHE PATENTSCHRIFT

(11) **EP 1 911 564 B1**
(45) Veröffentlichungstag und Bekanntmachung des Hinweises auf die Patenterteilung: **30.12.2009**
(21) Anmeldenummer: 07019001.2
(22) Anmeldetag: 27.09.2007
(51) Int. Cl.: B29C 45/28

(54) **Einspritzdüse zur Führung von Schmelzemasse in einer Kunststoffspritzgießform**
Injection nozzle for introducing a molten mass into a plastic injection moulding form
Buse d'injection destinée à l'introduction de masses de formage dans un moule d'injection de matières plastiques

(30) Priorität: 13.10.2006 DE 102006049073
(43) Veröffentlichungstag der Anmeldung: 16.04.2008
(73) Patentinhaber: HASCO Hasenclever GmbH + Co KG, 58513 Lüdenscheid (DE)
(72) Erfinder: Paulmann, Dirk, Dipl.-Ing. Maschinenbau, 58507 Lüdenscheid (DE); Kabbert, André, 58515 Lüdenscheid (DE)
(74) Vertreter: Ostriga, Sonnet, Wirths & Roche

(56) Entgegenhaltungen:
- EP-A- 0 962 296
- EP-A- 1 152 880
- EP-A- 1 602 466
- DE-C1- 19 608 676
- US-A- 3 677 682

## Beschreibung

Die Erfindung betrifft eine Einspritzdüse zur Führung von Schmelzemasse in einer Kunststoffspritzgießform gemäß dem Oberbegriff des Anspruchs 1.

Eine solche Einspritzdüse ist bekannt aus der DE 196 08 676 C1. Bei dieser Einspritzdüse wird die plastifizierte schmelzflüssige Kunststoffmasse über eine Eingangsbohrung einem zentralen Schmelzekanal zugeleitet. Von dem zentralen Schmelzekanal zweigt eine kurze Schrägbohrung ab, die, nahe der Anschnittöffnung, in eine kalottenartige Höhlung mündet. Von der Höhlung kann die Masse bei in Öffnungsrichtung angehobener Düsennadel durch die freigegebene Anschnittöffnung in den Formhohlraum eintreten.

Die in der DE 196 08 676 C1 beschriebene Höhlung zwischen Düsenspitze und Formplatte dient insbesondere dem Zweck der Isolation, d.h. der Verhinderung einer Wärmebrücke zwischen Einspritzdüse und Formplatte. Der Wärmeübergang von der Einspritzdüse auf die Formplatte soll minimiert werden.

Eine weitere Nadelverschlüßduse, bei der die Anschnittsöffungen strömungsgünstig angeordnet sind, ist in der EP 0962296-A2 offenbart.

Aus der US 4,781,572 ist eine Einspritzdüse bekannt, bei welcher die Schmelze über einen zentralen Schmelzekanal Schrägbohrungen zugeleitet wird, die sich in der Düsenspitze befinden und in eine kalottenartige Höhlung münden. Über die Höhlung wird die Schmelze einer Anschnittöffnung der Höhlung zugeführt, welche mittels einer Düsennadel verschließbar ist. In einem Bereich, welcher dem anschnittöffnungsseitigen Ende der Düsennadel benachbart ist, ist die Düsennadel auf dem gesamten Umfang ringnutartig ausgenommen, so dass die Düsennadel in diesem Bereich einen geringeren Durchmesser aufweist. Durch axiales Verschieben kann sowohl der Bereich geringeren Durchmessers, als auch der Endbereich mit größerem Durchmesser in der Laibung der Anschnittöffnung angeordnet werden.

Korrespondiert der Endbereich größeren Durchmessers mit der Laibung der Anschnittöffnung, ist die Anschnittöffnung verschlossen, so dass keine Schmelze in den Formhohlraum eintreten kann. Ist hingegen der Bereich geringeren Durchmessers in der Laibung der Anschnittöffnung angeordnet, wird zwischen der Laibung der Anschnittöffnung und dem Außendurchmesser der Düsennadel ein Ringraum gebildet, durch welchen die Schmelze die Anschnittöffnung in Richtung Formhohlraum passieren kann. Auch bei diesem Stand der Technik münden die Schrägbohrungen der Düsenspitze nahe der Anschnittöffnung der Düse in die Höhlung.

In der Praxis hat sich gezeigt, dass es beim Kunststoffspritzgießen nach einem Farbwechsel oft einer Vielzahl von Spritzdurchgängen bedarf, bis das Formteil keine Bestandteile der alten Farbe mehr aufweist. Es hat daher umfangreiche Versuche gegeben, welche das Ziel hatten, z.B. nach einem Farbwechsel oder einem Materialwechsel schneller mängelfreie Teile herzustellen.

Die Aufgabe der Erfindung besteht ausgehend von der DE 196 08 676 C1 darin, eine Einspritzdüse zur Führung von Schmelzemasse in einer Kunststoffspritzgießform zu schaffen, die in Bezug auf die Funktionssicherheit und die Wirtschaftlichkeit weiter verbessert ist. Insbesondere soll die Spritzgießmaschine nach einem Farbwechsel nach möglichst wenigen Spritzvorgängen einwandfreie Teile produzieren.

Die Aufgabe wird gelöst mit den Merkmalen des Anspruchs 1, insbesondere mit den kennzeichnenden Merkmalen.

Das Prinzip der Erfindung besteht im Wesentlichen darin, dass die Austrittsöffnung der Ausgangskanäle in die kalottenartige Höhlung an einer Stelle angeordnet ist, die von der Anschnittöffnung der Höhlung möglichst weit entfernt angeordnet ist. Wichtig dabei ist, dass die Austrittsöffnung derart angeordnet ist, dass bei einem Spritzvorgang die in der Höhlung befindliche Schmelze vollständig durch die aus den Austrittsöffnungen nachfließende Schmelze in die Anschnittöffnung verdrängt wird. Die Austrittsöffnung befindet sich im Bereich des Kalottenbodens, der z.B. von einem Dichtring gebildet ist und die kalottenartige Höhlung begrenzt. Münden mehrere Bohrungen der Düsenspitze in die Höhlung, sind alle Austrittsöffnungen in dem zuvor beschriebenen Bereich angeordnet.

"Kalottenartig" im Sinne der Erfindung kann jede Schalenform im weitesten Sinne bedeuten. Die Höhlung kann z.B. sphärisch oder kugelschalenartig ausgebildet sein. Im Querschnitt kann die Höhlung z.B. parabelförmig sein. Alternativ kann die Höhlung aber auch jede andere Schalenform aufweisen. Die Bezeichnungen "Kalottenboden" und "Kalottenscheitel" im Sinne der Erfindung weisen entsprechend auf den Boden bzw. den Scheitelbereich der schalenförmigen Höhlung hin.

"Anschnittöffnung" im Sinne der Erfindung kann eine Öffnung sein, welche die kalottenartige Höhlung direkt mit dem Formhohlraum verbindet. Alternativ kann die Anschnittöffnung aber z.B. auch die Öffnung zu einem Kanal sein welcher die Höhlung mittelbar mit dem Formhohlraum verbindet.

Mit "Scheitelbereich" im Sinne der Erfindung kann z.B. der Bereich gemeint sein, in welchem die Anschnittöffnung angeordnet ist.

"Bodenbereich" im Sinne der Erfindung ist ein Bereich, der bezüglich des Strömungsweges der Kunststoffschmelze möglichst weit vom Scheitelbereich der Höhlung entfernt ist, in welchem sich die Anschnittöffnung befindet. "Möglichst weit" ist dabei in Bezug auf den Strömungsverlauf zu verstehen ist. Der Bodenbereich kann z.B. von einer ringförmigen Schulter des Düsenkerns bzw. der Düsenspitze oder z.B. von der Stirnfläche eines Dichtrings gebildet sein.

Der Vorteil der Erfindung besteht darin, dass bei einem Farbwechsel der in der Höhlung befindliche Kunststoff vollständig von dem nachströmenden Kunststoff aus der Höhlung verdrängt wird. Befindet sich nach einem Werkstoff- oder Farbwechsel noch der zuvor verwendete Werkstoff oder der Werkstoff mit der zuvor verwendeten Färbung in der Höhlung, kann dieser Werkstoff bereits während eines Spritzvorgangs vollständig von dem neuen Werkstoff aus der Höhlung verdrängt werden. Es werden daher weniger Ausschussteile produziert, welche noch Reste mit der zuvor verwendeten Färbung oder dem zuvor verwendeten Material aufweisen. Die Düse ist schnell von dem zuvor verwendeten Werkstoff bzw. dem Werkstoff mit der zuvor verwendeten Färbung befreit und das Werkzeug schneller betriebsbereit für die Produktion einwandfreier Teile.

Gemäß einer ersten Ausführungsform erweitert sich der Ausgangskanal in Strömungsrichtung konisch. Die Austrittsöffnung des Ausgangskanals ist größer als die Eingangsöffnung des Ausgangskanals. Auf diese Weise wird an der Austrittsöffnung über einen großen Flächenquerschnitt ein Schmelzefluss erzeugt, der das in der Höhlung befindliche Kunststoffmaterial verdrängt. Durch die konische Erweiterung wird die Strömungsgeschwindigkeit der Kunststoffschmelze im Ausgangskanal geringer. Die langsamere Fließgeschwindigkeit erzeugt einen verbesserten Quellfluss, der sich beim Austreten der Kunststoffschmelze aus dem Ausgangskanal zu allen Seiten ausdehnt und dabei die in der Höhlung befindliche Kunststoffschmelze auch aus den Räumen zwischen den Austrittsöffnungen der Ausgangskanäle verdrängt.

Einer weiteren Ausgestaltung der Erfindung gemäß ist der Bodenbereich der Höhlung von einer Außenfläche eines Dichtringes begrenzt. Die Höhlung kann z.B. von der Stirnfläche des Dichtringes begrenzt sein.

Einer weiteren Ausgestaltung der Erfindung gemäß geht die Bodenfläche in eine konkave Ringfläche der Düsenspitze über. Z.B. Zwickel oder Hinterschneidungen werden somit verhindert. In derartige Räume kann nämlich Kunststoff gelangen, der bei einem Spritzgießzyklus nicht oder lediglich teilweise aus der Höhlung gespült wird. Durch die erfindungsgemäße Ausgestaltung werden im Bereich der Höhlung Räume, in denen kein oder lediglich ein geringer Austausch des in der Höhlung befindlichen Kunststoffs stattfindet, vermieden.

Gemäß einer weiteren Ausgestaltung der Erfindung ist der Dichtring aus einem Werkstoff geringer Wärmeleitfähigkeit gebildet. Der Dichtring kann z.B. aus Titan gebildet sein, so dass die Wärmeübertragung von der Einspritzdüse auf die Formplatte verringert wird. Es kommen aber z.B. auch Edelstähle oder andere geeignete Werkstoffe geringer Wärmeleitfähigkeit in Betracht.

Gemäß einer weiteren Ausgestaltung der Erfindung ist die lichte Weite der Höhlung im Bereich der Austrittsöffnung verbreitert. Das hat zur Folge, dass die Schmelze ungehindert aus der Austrittsöffnung des Ausgangskanals herausquellen kann und dabei die im Innenraum der Höhlung befindliche Schmelze vollständig verdrängt.

Gemäß einer weiteren Ausführungsform sind wenigstens zwei Ausgangskanäle über den Umfang verteilt angeordnet. Es können auch mehrere Ausgangskanäle über den Umfang der Düsenspitze verteilt angeordnet sein. Bei zwei oder mehr Austrittsöffnungen aus der Düsenspitze sind die Zwischenräume zwischen den Austrittsöffnungen so klein, dass das dort befindliche Schmelzematerial beim nächsten Spritzzyklus vollständig verdrängt wird. In diesem Fall können nach einem Farb- oder Werkstoffwechsel besonders schnell einwandfreie Teile produziert werden. Gemäß einer vorteilhaften Ausgestaltung sind möglichst viele Ausgangskanäle über den Umfang der Düsenspitze verteilt.

Einer weiteren Ausführungsform gemäß sind die Austrittsöffnungen über den Umfang der Düsenspitze gleich verteilt angeordnet. Indem die Austrittsöffnungen gleichmäßig auf einem Umfang der Düsenspitze verteilt sind, wird ebenfalls verhindert, dass sich z.B. zwischen zwei Austrittsöffnungen Stellen bilden, an denen erst nach einer großen Anzahl von Spritzzyklen ein Materialaustausch stattfindet.

Gemäß einer weiteren Ausführungsform ist eine in axialer Richtung hin- und her bewegbare Düsennadel zum Öffnen und Verschließen der Einspritzöffnung vorgesehen, wobei der zentrale Schmelzekanal die Düsennadel zumindest bereichsweise koaxial umgibt. Die Düsennadel ist somit bereichsweise innerhalb des zentralen Schmelzekanals angeordnet. Die Herstellung der Einspritzdüse ist bei dieser Ausführungsform vereinfacht, da kein gesonderter Aufnahmeraum für die Düsennadel vorzusehen ist. Der Hub der Düsennadel kann z.B. 1 bis 4 mm, insbesondere 2 mm betragen. Aufgrund des geringen Nadelhubs kann die freie, aus der Düsenspitze austretende Länge der Düsennadel gering sein. Bewegungen des freien Endes der Düsennadel quer zur Längsachse der Einspritzdüse werden somit verhindert.

Einer weiteren Ausgestaltung der Erfindung gemäß weist die Düsennadel einen vorderen Bereich auf, mittels welchem eine Anschnittöffnung des Formhohlraums verschließbar ist, wobei die Düsennadel dem vorderen Bereich benachbart mittels einer Führung zentriert ist. "Mittels einer Führung zentriert" im Sinne der Erfindung bedeutet, dass die Nadel, insbesondere aufgrund des geringen Nadelhubs, in jeder Position geführt ist und nie außer Kontakt mit der Führung gerät. Aufgrund des geringen Hubs und der Führung und Zentrierung der Düsennadel nahe der Anschnittöffnung kann die Länge der aus der Düsenspitze austretenden Nadelspitze gering sein. Die Führung und Zentrierung der Düsennadel nahe der Anschnittöffnung hat außerdem zur Folge, dass seitliche Bewegungen der Düsennadel quer zu einer Längsachse der Einspritzdüse verhindert bzw. minimiert werden. Seitliche Bewegungen der Düsennadel sollen vermieden werden, da der Kontakt des vorderen Bereichs der Düsennadel mit einem der Anschnittöffnung benachbarten Bereich der Formplatte einen erhöhten Verschleiß der Düsennadel zur Folge hat.

Gemäß einer weiteren Ausgestaltung der Erfindung ist die Führung als Gleitlager ausgebildet. Das Gleitlager kann z.B. von der Wand des Düsenkörpers gebildet sein.

Einer weiteren Ausgestaltung der Erfindung gemäß ist die Führung von der Innenwand einer Bohrung in der Düsenspitze gebildet. Die Düsennadel kann mit einer engen Spielpassung in der Bohrung aufgenommen sein, so dass Bewegungen der Düsennadel quer zur Längsachse vermieden werden. Die Innenfläche der Durchgangsbohrung kann einer Oberflächenbehandlung unterzogen sein. Darüber hinaus kann die Innenfläche der Bohrung beschichtet sein.

Weitere Vorteile ergeben sich anhand der Beschreibung eines in den Figuren dargestellten Ausführungsbeispiels. Es zeigen:
Fig. 1 eine Schnittdarstellung der erfindungsgemäßen Einspritzdüse,
Fig. 2 eine vergrößerte Schnittdarstellung des mit II gekennzeichneten Ausschnitts in Fig. 1, wobei ein Thermofühlerring sowie eine Düsenheizung nicht dargestellt sind,
Fig. 3 in Anlehnung an Fig. 2 eine Schnittdarstellung der Düsenspitze, wobei die Düsennadel nicht dargestellt ist, und
Fig. 4 eine Ansicht der erfindungsgemäßen Einspritzdüse.

Eine Einspritzdüse insgesamt wird in den Zeichnungen mit der Bezugsziffer 10 bezeichnet.

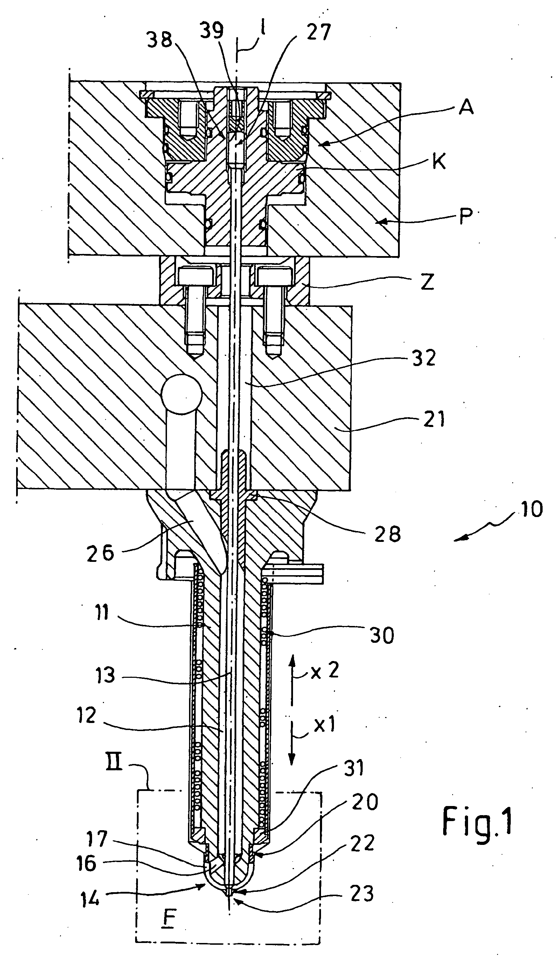

Gemäß Fig. 1 weist die Einspritzdüse 10 im Wesentlichen einen Düsenkern 11 mit einem zentralen Schmelzekanal 12, eine Düsennadel 13 und eine Antriebseinrichtung A für die Düsennadel 13 auf.

Mittels der Einspritzdüse 10 wird die aus einem Heißkanal 21 kommende Kunststoffschmelze über eine Anschnittöffnung 22 in einer Formplatte F dem nicht dargestellten Formhohlraum zugeleitet.

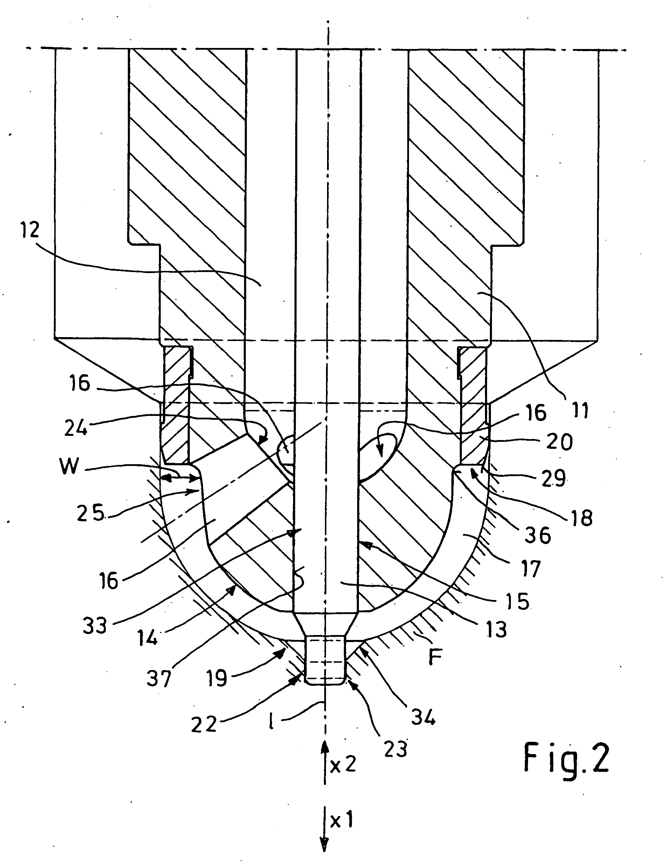

Die Düsennadel 13 dient dem Öffnen und Verschließen der Anschnittöffnung 22. Zum Öffnen und Verschließen der Anschnittöffnung 22 kann die Düsennadel 13 entlang einer Längsachse I der Einspritzdüse 10 in den Richtungen x1, x2 bewegt werden. Gemäß der Fig. 1 und 2 ist die Düsennadel 13 in einer Schließposition dargestellt, in welcher ein vorderer Bereich 23 der Düsennadel 13 in der Anschnittöffnung 22 angeordnet ist und Letztere dabei verschließt. Die Anschnittöffnung 22 ist mit einer Zentrierschräge 34 für die Düsennadel 13 versehen (siehe Fig. 2).

Durch eine Bewegung der Düsennadel 13 aus der in den Fig. 1 und 2 dargestellten Position in Richtung x2 kann die Düsennadel 13 in eine nicht dargestellte Offenposition bewegt werden, wobei der vordere Bereich 23 aus der Anschnittöffnung 22 entfernt wird. Befindet sich die Düsennadel 13 in der Offenposition kann die Kunststoffschmelze über die Anschnittöffnung 22 in den Formhohlraum fließen. Der Nadelhub beim Bewegen der Düsennadel 13 zwischen der Offen- und der Schließposition beträgt ca. 2mm und ist somit verhältnismäßig gering.

Die Düsennadel 13 wird gemäß Fig. 1 von einem Kolben K der Antriebseinrichtung A angetrieben, welcher in einer Aussparung der Aufspannplatte P geführt ist. Zur Befestigung am Kolben K weist die Düsennadel 13 einen Endbereich 27 auf, welcher mit einem Außengewinde 38 versehen ist. Das Außengewinde 38 ist in ein Innengewinde 39 des Kolbens K der Antriebseinrichtung A eingeschraubt. Wird der Kolben K auf hier nicht näher dargestellte Weise in eine der Richtungen x1, x2 bewegt, so bewegt sich auch die Düsennadel 13 in die entsprechende Richtung x1, x2.

Die Düsennadel 13 durchgreift gemäß Fig. 1 eine Zwischenplatte Z, eine Bohrung 32 im Heißkanal 21, eine Gleitlagerbuchse 28, die im Düsenkern 11 befestigt ist, den zentralen Schmelzekanal 12 des Düsenkerns 11 sowie eine Bohrung 15 in einer Düsenspitze 14 des Düsenkerns 11. Der vordere Bereich 23 der Düsennadel 13 ragt aus der Düsenspitze 14 hinaus.

Die Düsennadel 13 ist in einem mittleren Bereich in der Gleitlagerbuchse 28 gelagert, während ein Bereich 33 der Düsennadel 13 (siehe Fig. 2) von einer Innenwand 37 der Bohrung 15 gleitgeführt und zentriert ist. Die Führung der Düsennadel 13 nahe der Anschnittöffnung 22 hat den Vorteil, dass die aus der Düsenspitze 14 herausragende Nadelspitze 23 eine geringe Länge aufweist. Aufgrund der geringen Länge werden die Bewegungen des Bereichs 23 der Düsennadel 13 quer zur Längsachse I der Einspritzdüse 10 minimiert und damit der Verschleiß der Düsennadel 13 verringert, welcher aufgrund des Kontakts mit der Formplatte F auftritt.

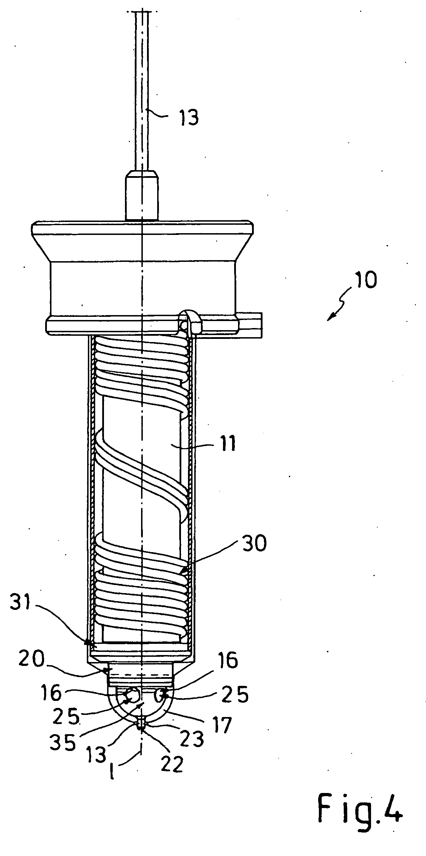

Die während eines Spritzgießvorgangs aus dem Heißkanal 21 kommende Schmelze wird gemäß Fig. 1 über eine Schrägbohrung 26 dem zentralen Schmelzekanal 12 zugeführt. Von dem zentralen Schmelzekanal 12 teilen sich mehrere Ausgangskanäle 16 ab, die gemäß der Fig. 1 bis 4 in eine kalottenartige Höhlung 17 münden. Die kalottenartige Höhlung 17 hat den Zweck, einen direkten Kontakt zwischen Formplatte F und Einspritzdüse 10 und damit einen Wärmeübergang zu vermeiden. Zudem dient die Höhlung 17 als Schmelzeleitkanal, welcher die Kunststoffschmelze zur Anschnittöffnung 22 führt.

Im vorliegenden Ausführungsbeispiel sind fünf Ausgangskanäle 16 ausgebildet. Alternativ kann die Anzahl der Ausgangskanäle aber von dieser Zahl abweichen, d.h. es können mehr oder weniger als fünf Ausgangskanäle 16 vorhanden sein. Die Austrittsöffnungen 25 der Ausgangskanäle 16 sind gleichmäßig auf dem Umfang der Düsenspitze 14 verteilt angeordnet. Da in der Bohrung 15 die Düsennadel 13 geführt ist, kann die Schmelze nicht durch die Bohrung 15 in die Höhlung 17 gelangen.

In einem Bodenbereich 18 (siehe Fig. 2) ist die Höhlung 17 mittels eines Dichtringes 20 abgedichtet. Der Dichtring 20 ist am Düsenkern 11 befestigt und erstreckt sich radial zwischen dem Düsenkern 11 und der Formplatte F. Eine Stirnfläche 29 des Dichtrings 20 bildet somit in einem Bodenbereich 18 eine Begrenzung der kalottenartigen Höhlung 17. Eine Kalottenspitze der Höhlung 17 ist mit der Bezugsziffer 19 bezeichnet. Der Dichtring 20 ist aus einem isolierenden Werkstoff, z.B. aus Titan, gefertigt. Eine Wärmeübertragung von der Einspritzdüse 10 auf die Formplatte F wird somit weitestgehend verhindert.

Die Anschnittöffnung 22 ist im Bereich der Kalottenspitze 19 der Höhlung 17 angeordnet. Über die Anschnittöffnung 22 ist die Höhlung 17 mit dem nicht dargestellten Formhohlraum verbunden.

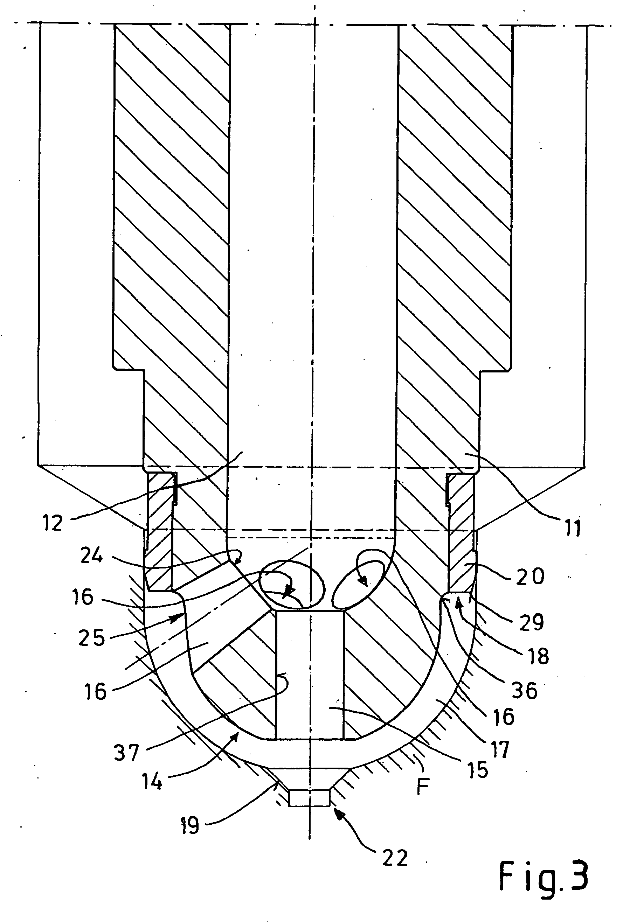

Die Ausgangskanäle 16 erweitern sich stromabwärts konisch (siehe Fig. 2 und 3), so dass jeder Ausgangskanal 16 an einer Zugangsöffnung 24 einen geringeren Durchmesser aufweist als an der Austrittsöffnung 25. Dieser sich vergrößernde Strömungsquerschnitt hat eine Abnahme der Strömungsgeschwindigkeit im Ausgangskanal 16 zur Folge. Aufgrund der geringeren Strömungsgeschwindigkeit an der Austrittsöffnung 25 gegenüber der Zugangsöffnung 24 entsteht ein vorteilhafter Quellfluss der Kunststoffschmelze.

Der Quellfluss hat zur Folge, dass sich die Kunststoffschmelze beim Verlassen des Ausgangskanals 16 zu allen Seiten hin in die Höhlung 17 hinein ausbreitet und dort befindliches Kunststoffmaterial verdrängt. Der vergrößerte Durchmesser der Austrittsöffnung 25 bewirkt ebenfalls einen besseren Spüleffekt, da Zwischenräume 35 zwischen den Austrittsöffnungen 25 verkleinert werden. Unterstützt wird der Quellfluss auch durch die vergrößerte lichte Weite W der Höhlung 17 im Bodenbereich 18 der Höhlung 17.

Die Austrittsöffnungen 25 grenzen unmittelbar an den Dichtring 20 an. Die Stirnfläche 29 des Dichtrings 20, welche die Höhlung 17 im Bodenbereich 18 begrenzt, geht in eine konkave Ringfläche 36 der Düsenspitze 14 über. Auf diese Weise werden Räume verhindert, in welchen sich Kunststoffschmelze ansammeln kann, ohne dass diese durch die nachfließende Kunststoffschmelze der folgenden Spritzgießzyklen vollständig aus der Höhlung 17 verdrängt wird.

Erfindungsgemäß wird, beispielsweise bei einem Farbwechsel, das in der Höhlung 17 befindliche Schmelzematerial vollständig durch das nachströmende Schmelzematerial entfernt, so dass sich bereits nach einem oder wenigen Spritzvorgängen keine unerwünschten Schmelze-Reste, welche eine zuvor verwendete andere Färbung oder einen anderen Werkstoff aufweisen, mehr in der Form befinden.

Es sei noch erwähnt, dass die Temperierung der Einspritzdüse 10 mittels einer als Rohrheizkörper ausgebildeten Heizung 30 erfolgt und dass am Düsenkern 11 ein Thermofühlerring 31 vorgesehen ist, an welchem die Temperatur gemessen und mit einer nicht dargestellten Steuer- und Regelvorrichtung geregelt werden kann.

Darüber hinaus sei erwähnt, dass alternativ zu der dargestellten Ausführungsform die Düsenspitze auch als separates Teil ausgebildet und mit dem Düsenkern 11 verschraubt sein kann.

## Patentansprüche

1. Einspritzdüse zur Führung von Schmelzemasse in einer Kunststoffspritzgießform mit einem Düsenkern (11) und mit einem zentralen Schmelzekanal (12), welcher stromabwärts in wenigstens einen schräg zum Schmelzekanal (12) verlaufenden Ausgangskanal (16) des Düsenkerns (11) übergeht, welcher mit einer fest angeordneten Austrittsöffnung (25) für die Kunststoffschmelze versehen ist, wobei die Austrittsöffnung (25) in eine als kalottenartiger Ringraum ausgebildete Höhlung (17) mündet, welche mit einer Anschnittöffnung (22) eines Formhohlraums verbunden ist, wobei die kalottenartige Höhlung (17) einen Scheitelbereich (19) und einen Bodenbereich (18) aufweist, wobei die Anschnittöffnung (22) in dem Scheitelbereich (19) der kalottenartigen Höhlung (17) angeordnet ist und wobei eine Düsennadel (13) vorgesehen ist, welche zwischen einer die Anschnittöffnung (22) verschließenden und einer die Anschnittöffnung (22) freigebenden Position bewegbar ist, **dadurch gekennzeichnet, dass** die Höhlung (17) zwischen einer Formplatte (F) und einer Düsenspitze (14) gebildet ist und dass die Austrittsöffnung (25) des Ausgangskanals (16) in einer von dem Scheitelbereich (19) der Höhlung (17) stromaufwärts angeordneten, möglichst weit entfernten Stelle, dem Bodenbereich (18) der Höhlung (17) benachbart, angeordnet ist.

2. Einspritzdüse nach Anspruch 1, **dadurch gekennzeichnet, dass** der Ausgangskanal (16) sich in Strömungsrichtung der Kunststoffschmelze konisch erweitert.

3. Einspritzdüse nach einem der Ansprüche 1 oder 2, **dadurch gekennzeichnet, dass** der Bodenbereich (18) der Höhlung (17) von einer Bodenfläche (29) begrenzt ist, die von der Stirnfläche (29) eines Dichtrings (20) gebildet ist.

4. Einspritzdüse nach Anspruch 3, **dadurch gekennzeichnet, dass** die Austrittsöffnung (25) an die Bodenfläche (29) angrenzt.

5. Einspritzdüse nach einem der Ansprüche 3 oder 4, **dadurch gekennzeichnet, dass** die Bodenfläche (29) in eine konkave Ringfläche (36) der Düsenspitze (14) übergeht.

6. Einspritzdüse nach einem der Ansprüche 1 bis 5, **dadurch gekennzeichnet, dass** der Dichtring (20) aus einem Werkstoff geringer Wärmeleitfähigkeit gebildet ist.

7. Einspritzdüse nach einem der Ansprüche 1 bis 6, **dadurch gekennzeichnet, dass** die die lichte Weite (W) der Höhlung (17) im Bereich der Austrittsöffnung (25) bezüglich der Düsenspitze (14) verbreitert ist.

8. Einspritzdüse nach einem der Ansprüche 1 bis 7, **dadurch gekennzeichnet, dass** wenigstens zwei Ausgangskanäle (16) vorgesehen sind.

9. Einspritzdüse nach einem der Ansprüche 1 bis 8, **dadurch gekennzeichnet, dass** die Austrittsöffnungen (25) der Ausgangskanäle (16) über den Umfang der Düsenspitze (14) gleich verteilt angeordnet sind.

10. Einspritzdüse nach einem der Ansprüche 1 bis 9, **dadurch gekennzeichnet, dass** der zentrale Schmelzekanal (12) die Düsennadel (13) zumindest bereichsweise koaxial umgibt.

11. Einspritzdüse nach einem der Ansprüche 1 bis 10, **dadurch gekennzeichnet, dass** ein Nadelhub der Düsennadel (13) 2-4 mm beträgt.

12. Einspritzdüse nach einem der Ansprüche 1 bis 10, **dadurch gekennzeichnet, dass** zum Verschließen der Anschnittöffnung (22) ein vorderer Bereich (23) der Düsennadel (13) wenigstens teilweise in die Anschnittöffnung (22) bewegbar ist und dass die Düsennadel (13) dem Bereich (23) benachbart mittels einer Führung (37) zentriert ist.

13. Einspritzdüse nach Anspruch 11, **dadurch gekennzeichnet, dass** die Führung von der Innenwand (37) einer Bohrung (15) in der Düsenspitze (14) gebildet ist.

14. Einspritzdüse nach Anspruch 11, **dadurch gekennzeichnet, dass** die Führung (37) als Gleitlager ausgebildet ist.

## Claims

1. Injection nozzle for guiding a molten mass in a plastics injection mould with a nozzle core (11) and with a central melt channel (12) which passes downstream into at least one exit channel (16), extending obliquely to the melt channel (12), of the nozzle core (11), which exit channel is provided with a fixed outlet aperture (25) for the plastics melt, wherein the outlet aperture (25) leads into a hollow (17) which is formed as a spherical cap-like annular space and is connected to a gate aperture (22) of a mould cavity, wherein the spherical cap-like hollow (17) has a vertex region (19) and a bottom region (18), wherein the gate aperture (22) is disposed in the vertex region (19) of the spherical cap-like hollow (17), and wherein a nozzle needle (13) is provided, which needle can be moved between a position which closes the gate aperture (22) and one which uncovers the gate aperture (22), **characterised in that** the hollow (17) is formed between a mould plate (F) and a nozzle tip (14), and that the outlet aperture (25) of the exit channel (16) is disposed in a location disposed upstream of the vertex region (19) of the hollow (17) and as remote as possible, adjacent to the bottom region (18) of the hollow (17).

2. Injection nozzle according to Claim 1, **characterised in that** the exit channel (16) widens conically in the direction of flow of the plastics melt.

3. Injection nozzle according to either of Claims 1 and 2, **characterised in that** the bottom region (18) of the hollow (17) is defined by a bottom surface (29) which is formed by the end face (29) of a sealing ring (20).

4. Injection nozzle according to Claim 3, **characterised in that** the outlet aperture (25) adjoins the bottom surface (29).

5. Injection nozzle according to either of Claims 3 and 4, **characterised in that** the bottom surface (29) passes into a concave annular surface (36) of the nozzle tip (14).

6. Injection nozzle according to any one of Claims 1 to 5, **characterised in that** the sealing ring (20) is formed from a material of low thermal conductivity.

7. Injection nozzle according to any one of Claims 1 to 6, **characterised in that** the inside width (W) of the hollow (17) is widened with respect to the nozzle tip (14) in the region of the outlet aperture (25).

8. Injection nozzle according to any one of Claims 1 to 7, **characterised in that** at least two exit channels (16) are provided.

9. Injection nozzle according to any one of Claims 1 to 8, **characterised in that** the outlet apertures (25) of the exit channels (16) are disposed in a uniformly distributed manner over the circumference of the nozzle tip (14).

10. Injection nozzle according to any one of Claims 1 to 9, **characterised in that** the central melt channel (12) coaxially surrounds the nozzle needle (13), at least in regions.

11. Injection nozzle according to any one of Claims 1 to 10, **characterised in that** a needle stroke of the nozzle needle (13) is 2-4 mm.

12. Injection nozzle according to any one of Claims 1 to 10, **characterised in that** a front region (23) of the nozzle needle (13) can be moved at least partly into the gate aperture (22) in order to close the gate aperture (22), and that the nozzle needle (13), being adjacent to the region (23), is centred by means of a guide (37).

13. Injection nozzle according to Claim 11, **characterised in that** the guide is formed by the inner wall (37) of a bore (15) in the nozzle tip (14).

14. Injection nozzle according to Claim 11, **characterised in that** the guide (37) is formed as a sliding-contact bearing.

## Revendications

1. Buse d'injection destinée à l'introduction de masse fondue dans un moule d'injection de matière synthétique, avec un noyau de buse (11) et avec un canal à masse fondue (12) central, se transformant, en aval, en au moins un canal de sortie (16), s'étendant obliquement par rapport au canal de masse fondue (12), du noyau de buse (11), muni d'une ouverture de sortie (25) à position fixe pour la masse fondue de matière synthétique, l'ouverture de sortie (25) débouchant dans une cavité (17) réalisée sous forme d'espace annulaire du genre d'une calotte, reliée à une ouverture d'injection (22) d'un espace creux de moule, la cavité (17) du genre d'une calotte présentant une zone de sommet (19) et une zone de fond (18), l'ouverture d'injection (22) étant disposée dans la zone de sommet (19) de la cavité (17) du genre d'une calotte, et étant prévue une aiguille de buse (13), déplaçable entre une position obturant l'ouverture d'injection (22) et une position libérant l'ouverture d'injection (22), **caractérisé en ce que** la cavité (17) est formée entre une plaque de moule (F) et une pointe de buse (14), et **en ce que** l'ouverture de sortie (25) du canal de sortie (16) est disposée en un emplacement aussi éloigné que possible de la zone de sommet (19), disposé en amont de la cavité (17), au voisinage de la zone de fond (18) de la cavité (17).

2. Dispositif selon la revendication 1, **caractérisé en ce que** le canal de sortie (16) va en s'élargissant de manière conique, en évoluant dans le sens de l'écoulement de la masse fondue de matière synthétique.

3. Dispositif selon l'une des revendications 1 ou 2, **caractérisé en ce que** la zone de fond (18) de la cavité (17) est délimitée par une surface de fond (29), formée par la face frontale (29) d'une bague d'étanchéité (20).

4. Dispositif selon la revendication 3, **caractérisé en ce que** l'ouverture de sortie (25) est contiguë à la surface de fond (29).

5. Dispositif selon l'une des revendications 3 ou 4, **caractérisé en ce que** la surface de fond (29) se transforme en une surface annulaire (36) concave de la pointe de buse (14).

6. Dispositif selon l'une des revendications 1 à 5, **caractérisé en ce que** la bague d'étanchéité (20) est formée d'un matériau de faible conductivité thermique.

7. Dispositif selon l'une des revendications 1 à 6, **caractérisé en ce que**, dans la zone de l'ouverture de sortie (25), la largeur (W) libre de la cavité (17) est élargie par rapport à la pointe de buse (14).

8. Dispositif selon l'une des revendications 1 à 7, **caractérisé en ce qu'**au moins deux canaux de sortie (16) sont prévus.

9. Dispositif selon l'une des revendications 1 à 8, **caractérisé en ce que** les ouvertures de sortie (25) des canaux de sortie (16) sont réparties de manière identique sur la périphérie de la pointe de buse (14).

10. Dispositif selon l'une des revendications 1 à 9, **caractérisé en ce que** le canal à masse fondue (12) central entoure coaxialement, au moins par zones, l'aiguille de buse (13).

11. Dispositif selon l'une des revendications 1 à 10, **caractérisé en ce qu'**une course de l'aiguille de buse (13) est dans la fourchette de 2 à 4 mm.

12. Dispositif selon l'une des revendications 1 à 10, **caractérisé en ce que**, pour obturer l'ouverture d'injection (22), une zone avant (23) de l'aiguille de buse (13) est déplaçable, au moins partiellement, dans l'ouverture d'injection (22), et **en ce que** l'aiguille de buse (13) est centrée au voisinage de la zone (23), au moyen d'un guidage (37).

13. Dispositif selon la revendication 11, **caractérisé en ce que** le guidage est formé par la paroi intérieure (37) d'un perçage (15) ménagé dans la pointe de buse (14).

14. Dispositif selon la revendication 11, **caractérisé en ce que** le guidage (37) est réalisé sous forme de palier à glissement.
